# EUROPÄISCHE PATENTSCHRIFT

(11) **EP 0 491 902 B1**
(45) Veröffentlichungstag und Bekanntmachung des Hinweises auf die Patenterteilung: **01.03.1995**
(21) Anmeldenummer: 91911869.5
(22) Anmeldetag: 26.06.1991
(51) Int. Cl.: B65G 47/64

(54) **VORRICHTUNG ZUM AUS- U. EINSCHLEUSEN VON KLEINGUT AUS EINEM TRANSPORTBAND**
DEVICE FOR FEEDING SMALL OBJECTS FROM ONE CONVEYOR BELT ON TO ANOTHER
DISPOSITIF DE TRANSFERT DE MARCHANDISES DE PETITES DIMENSIONS TRANSPORTEES SUR UNE BANDE CONVOYEUSE

(30) Priorität: 12.07.1990 DE 4022163
(43) Veröffentlichungstag der Anmeldung: 01.07.1992
(73) Patentinhaber: Licentia Patent-Verwaltungs-GmbH, 60596 Frankfurt (DE)
(72) Erfinder: MALOW, Siegmar, D-7750 Konstanz 19 (DE); BRUCKS, Norbert, D-1040 Berlin (DE)
(74) Vertreter: Vogl, Leo, Dipl.-Ing.
(86) Internationale Anmeldenummer: EP9101198
(87) Internationale Veröffentlichungsnummer: WO9200906

(56) Entgegenhaltungen:
- AT-B- 268 144

## Beschreibung

Die Erfindung betrifft eine Vorrichtung zum Aus- u. Einschleusen von Kleingut insbesondere Päckchen aus einem Transportband nach dem Oberbegriff des Anspruches 1.

Es sind derartige Vorrichtungen bekannt, bei denen auf dem Transportband eine schwenkbare Seitenführung angeordnet ist, die zum Ein- u. Ausschleusen der zu transportierenden Teile in Richtung des abzweigenden Transportbandes verschwenkt wird. Hierbei werden die Teile durch die Seitenführung in das abzweigende Transportband geleitet, wobei die schwenkbare Seitenführung einen spitzen Winkel zur bisherigen Transportrichtung bildet.

Aufgabe der Erfindung ist es, eine Aus- u. Einschleusvorrichtung zu schaffen, bei der die Verbindung des Haupt- und des Abzweigtransportbandes lückenlos erfolgen kann.

Gemäß der Erfindung wird dies durch die Merkmale des Anspruches 1 erreicht.

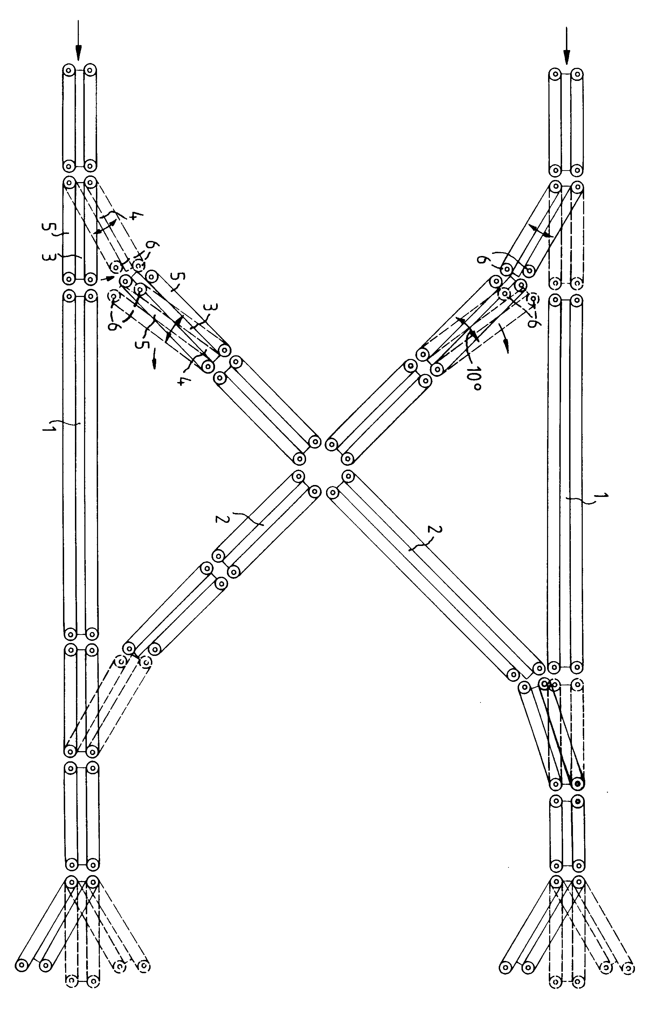

Ein Ausführungsbeispiel der Erfindung ist nachfolgend anhand der beiliegenden Zeichnung beschrieben.

In der Zeichnung sind mit 1 die Haupttransportbänder bezeichnet, auf denen die nicht näher dargestellten Teile in Pfeilrichtung befördert werden. Die beiden Haupttransportbänder sind durch Abzweigtransportbänder kreuzweise miteinander verbunden, so daß die Teile in Förderrichtung von einem in das andere Transportband übergeleitet oder abgeleitet werden können.

Gemäß der Erfindung sind in den Haupttransportbändern 1 und an den Anfängen der Abzweigtransportbänder 2 ausschwenkbare Module 3 angeordnet, die vom Haupttransportband 1 hinweg zueinander einschwenkbar sind. Die Module 3 bestehen aus einem den Boden des Moduls bildenden horizontalen Transportband 4 und seitlichen Transportbändern 5, die senkrecht auf dem Bodentransportband stehen.

Der aus dem Haupttransportband 1 ausschwenkbare Modul 3 weist Seitenbänder 5 gleicher Länge auf. Dies ist erforderlich, um eine durchgehende gerade Förderstrecke beim Transportband 1 zu erhalten.

Im ausgeschwenkten Zustand führt die gleiche Seitenlänge in Richtung des Abzweigtransportbandes 2 zu versetzter Anordnung der Endpunkte 6 der Seitenbänder in Richtung des Abzweigtransportbandes.

Zur Vermeidung einer Lücke der Seitenführung des zu transportierenden Gutes ist gemäß der Erfindung auch beim Abzweigtransportband ein ausschwenkbarer Modul 3 vorgesehen, der spiegelbildlich versetzte Endpunkte 6 der Seitentransportbänder aufweist. Die Anordnung ist ferner so getroffen, daß durch eine Steuerung vor dem Ausschwenken des Moduls des Haupttransportbandes der Modul des Abzweigtransportbandes in Richtung der Haupttransportstrecke verschwenkt wird und nach Erreichen der ausgeschwenkten Endstellung des Moduls des Haupttransportbandes 1 der Modul des Abzweigtransportbandes in Fluchtlinie mit dem Modul des Haupttransportbandes eingeschwenkt wird.

Durch die erfindungsgemäße Lösung wird erreicht, daß eine durchgehende Abzweigtransportstrecke ohne Lücken zwischen dem Modul des Haupttransportbandes und dem Modul des Abzweigtransportbandes, beispielsweise Modul 3, erstellt wird und damit Doppelkreuzungen, wie im Ausführungsbeispiel dargestellt, möglich sind.

## Patentansprüche

1. Vorrichtung zum Aus- u. Einschleusen von Kleingut aus einem Haupttransportband (1) in ein Abzweigtransportband (2) mit einer schwenkbaren Seitenführung senkrecht zum Transportband, dadurch gekennzeichnet,
daß sowohl im Haupttransportband (1) als auch am Anfang des Abzweigtransportbandes (2) ein schwenkbarer Modul (3) angeordnet ist, wobei jeder Modul (3) zwei senkrecht auf dem Transportband stehende seitliche Transportbänder (5) aufweist und die seitlichen Transportbänder (5) des schwenkbaren Moduls (3) des Haupttransportbandes (1) gleich lang sind und die seitlichen Transportbänder (5) des schwenkbaren Moduls des Abzweigtransportbandes (2) unterschiedliche Längen aufweisen, wobei der Längenunterschied dem Versatz der Endpunkte (6) der seitlichen Transportbänder (5) des Moduls (3) des Haupttransportbandes (7) im ausgeschwenkten Zustand entspricht.

2. Vorrichtung nach Anspruch 1, dadurch gekennzeichnet, daß eine Steuerung angeordnet ist, die vor dem Ausschwenken des Moduls (3) des Haupttransportbandes (1) den Modul (3) des Abzweigtransportbandes (2) in Richtung des Haupttransportbandes verschwenkt und nach Ausschwenken des Moduls (3) des Haupttransportbandes (1) den Modul (3) des Abzweigtransportbandes in Fluchtlinie mit dem Modul (3) des Haupttransportbandes (1) zurückschwenkt.

3. Vorrichtung nach Anspruch 2, dadurch gekennzeichnet, daß die Verschwenkung des Moduls des Abzweigtransportbandes (2) in Richtung des Haupttransportbandes (1) ca. 10° beträgt.

## Claims

1. Device for the feeding out and feeding in of small articles from a main transport belt (1) into a branching-off transport belt (2) with a pivotable lateral guidance perpendicular to the transport belt, characterised thereby that a pivotable module (3) is arranged in the main transport belt (1) and also at the start of the branching-off transport belt (2), wherein each module (3) comprises two lateral transport belts (5) standing perpendicularly on the transport belt and the lateral transport belts (5) of the pivotable module (3) of the main transport belt (1) are of equal length whilst the lateral transport belts (5) of the pivotable module of the branching-off transport belt (2) have different lengths, wherein the length difference corresponds to the offset of the end points (6) of the lateral transport belts (5) of the module (3) of the main transport belt (1) in the pivoted-out state.

2. Device according to claim 1, characterised thereby that a control is arranged which pivots the module (3) of the branching-off transport belt (2) in the direction of the main transport belt (1) before the pivoting out of the module (3) of the main transport belt and which pivots the module (3) of the branching-off transport belt back into alignment with the module (3) of the main transport belt (1) after pivoting out of the module (3) of the main transport belt (1).

3. Device according to claim 2, characterised thereby that the pivotation of the module of the branching-off transport belt (2) in the direction of the main transport belt (1) amounts to about 10°.

## Revendications

1. Dispositif pour le transfert d'articles de petite taille en provenance et en direction d'une bande convoyeuse principale (1) vers une bande convoyeuse dérivée (2), comportant un guidage latéral pivotant perpendiculaire à la bande convoyeuse, caractérisé en ce que : tant dans la bande convoyeuse principale (1) qu'au départ de la bande convoyeuse dérivée (2) est agencé un module pivotant (3), chaque module (3) comportant deux bandes convoyeuses latérales (5) situées perpendiculairement à la bande convoyeuse, et en ce que les bandes convoyeuses latérales (5) du module pivotant (3) de la bande convoyeuse principale (1) ont la même longueur, et que les bandes convoyeuses latérales (5) du module pivotant de la bande convoyeuse dérivée (2) ont des longueurs différentes, la différence de longueur correspondant au décalage des points d'extrémité (6) des bandes convoyeuses latérales (5) du module (3) de la bande convoyeuse principale (1) dans la condition pivotée vers l'extérieur.

2. Dispositif selon la revendication 1, caractérisé en ce qu'il est prévu une commande qui, avant pivotement vers l'extérieur du module (3) de la bande convoyeuse principale (1), pivote le module (3) de la bande convoyeuse dérivée (2) en direction de la bande convoyeuse principale, et après pivotement vers l'extérieur du module (3) de la bande convoyeuse principale (1), pivote en retour le module (3) de la bande convoyeuse dérivée en alignement avec le module (3) de la bande convoyeuse principale (1).

3. Dispositif selon la revendication 2, caractérisé en ce que le pivotement du module de la bande convoyeuse dérivée (2) en direction de la bande convoyeuse principale (1) s'élève à environ 10°.
